# EUROPEAN PATENT APPLICATION

(11) **EP 3 480 636 A1**
(43) Date of publication of application: **08.05.2019**
(21) Application number: 18202834.0
(22) Date of filing: 26.10.2018
(51) Int. Cl.: G02B 6/44

(54) **CONNECTION APPARATUS FOR SEALING CABLE, AND COMMUNICATIONS TERMINAL BOX**

(30) Priority: 27.10.2017 WO PCT/CN2017/108071
(71) Applicant: Huawei Technologies Co., Ltd., Shenzhen, Guangdong 518129 (CN)
(72) Inventor: YANG, Bo, SHENZHEN, Guangdong 518129 (CN); PEI, Guohua, SHENZHEN, Guangdong 518129 (CN); LI, Dong, SHENZHEN, Guangdong 518129 (CN); XIONG, Wei, SHENZHEN, Guangdong 518129 (CN); YANG, Anliang, SHENZHEN, Guangdong 518129 (CN)
(74) Representative: Thun, Clemens

(57) **Abstract**

The present invention provides a connection apparatus for sealing a cable, and a communications terminal box. The connection apparatus includes a hollowly disposed enclosure, a clamping part is disposed in the enclosure, and the clamping part is located between a first end and a second end of the enclosure. A first communicating part through which the cable passes is disposed on a first sealing kit, the first sealing kit enters the enclosure from the first end, and moves towards the second end of the enclosure in an axial direction. The clamping part squeezes the first sealing kit, so that the first communicating part wraps and seals the cable. In addition, the clamping part wraps and seals the first sealing kit, so that the cable is sealed in the enclosure. The deformed first sealing kit is detachably fastened in the enclosure by using a first fastening structure, so that the cable is installed. This structure can be repeatedly opened, so that detachment is convenient, a driving power supply is not required, and an installment scenario is not limited. Further, the communications terminal box does not need to be repeatedly flipped when the cable is led in. Therefore, in comparison with an existing mechanism, installment can be simplified and installment efficiency can be improved.

## Description

### TECHNICAL FIELD

This application relates to the field of mechanical technologies, and in particular, to a connection apparatus for sealing a cable, and a communications terminal box.

### BACKGROUND

During cabling in a fiber to home phase, after an optical cable is inserted into a fiber access terminal, the optical cable needs to be sealed and fastened. Generally, the optical cable is sealed by using a heat shrinkable tube for sealing. However, an end of the optical cable sealed in a heat shrink sealing manner cannot be repeatedly opened, and this is not convenient for operations such as maintenance and replacement. In addition, a dedicated tool such as a heat gun needs to be used, and this dedicated tool requires a power supply. Usually, it is rather difficult to obtain power for field construction. Therefore, a scenario to which the sealing manner is applicable is limited.

To break a limitation on relying on a dedicated tool, currently, the optical cable is mainly sealed in a mechanical sealing manner. However, in the mechanical sealing manner, many sealing components need to be installed, and these sealing components are installed in a strict sequence with a complex operation step. Rework is prone to a scenario especially in which a plurality of optical cables are inserted into one optical cable hole. In addition, when an optical cable is subsequently added, an existing optical cable with a service enabled is affected, causing inconvenience for managing a single cable.

### SUMMARY

This application provides a connection apparatus for sealing a cable, and a communications terminal box, so as to resolve a prior-art problem of low efficiency for drop cable installment.

A first aspect of this application provides a connection apparatus for sealing a cable. The connection apparatus may be used together with a communications terminal box, and may be connected to the communications terminal box. The communications terminal box may include a splitting and splicing closure, a cable-joint protection box, another fiber access terminal, and the like. This is not specifically limited in this application. In this application, the connection apparatus includes a hollowly disposed enclosure, a clamping part is disposed in the enclosure, and the clamping part is located between a first end and a second end of the enclosure. A first communicating part through which the cable passes is disposed on a first sealing kit. During installment, after the cable passes through the first communicating part, the first sealing kit enters the enclosure from the first end, and moves towards the second end of the enclosure in an axial direction. After starting to enter the clamping part, the first sealing kit is gradually deformed along an inner peripheral wall of the clamping part. The clamping part squeezes the first sealing kit, so that the first communicating part wraps and seals the cable. In addition, the clamping part wraps and seals the first sealing kit, so that the cable is sealed in the enclosure. Finally, the deformed first sealing kit is detachably fastened in the enclosure by using a first fastening structure, so that the cable is installed. According to this structure, an inserted cable can be fastened and sealed. In addition, this structure can be repeatedly opened, so that detachment is convenient, a driving power supply is not required, and an installment scenario is not limited. Further, the communications terminal box does not need to be repeatedly flipped when the cable is led in. Therefore, in comparison with an existing mechanism, installment can be simplified and installment efficiency can be improved.

In some possible designs, at least two first communicating parts are disposed on the first sealing kit. Each first communicating part can fasten a bunch of cables. Therefore, the first sealing kit can fasten at least two bunches of cables. Each bunch of cables may include a plurality of optical cables. A notch communicating with the first communicating part may be further disposed on the first sealing kit, so that the cable enters the first communicating part through the notch. Therefore, the cable can pass through the first communicating part with no need of cutting off the cable.

In some possible designs, the inner peripheral wall of the clamping part gradually tightens in a direction from the first end to the second end of the enclosure. Therefore, the first sealing kit can enter the clamping part easily, and gradually deform elastically along the inner wall of the clamping part. A curved surface of the clamping part may be a wedge-cone curved surface or a sectoral curved surface. By using the wedge-cone curved surface or the sectoral curved surface, the cable can be better inserted, the first sealing kit can be better mechanically squeezed into the curved surface, and certainly better sealing performance can be brought. The clamping part may be a part of the enclosure, or the clamping part may be detachably fastened and connected to the enclosure, so that detachment is convenient, and a proper clamping part can be selected according to a shape of an axial section of the cable.

In some possible designs, the first fastening structure includes a first fastener and a second fastener. One of the first fastener and the second fastener is disposed at the first end of the enclosure, and the other is disposed at the second end of the enclosure. The first fastener is detachably fastened and connected to the second fastener. The first sealing kit is fastened in the enclosure. By setting the two fasteners (that is, the first fastener and the second fastener), the first sealing kit can be better clamped and fastened more flexibly. The enclosure does not need to be rotated in a fastening process, provided that the first fastener is fastened to the second fastener. The second fastener may include a baseplate and a fastened bar disposed on the baseplate, and the baseplate abuts against the second end of the enclosure, so that the baseplate of the second fastener is positioned at the second end of the enclosure. A groove matching the baseplate may be further disposed in the enclosure, so that the baseplate can be further positioned. An internal thread is disposed on the first fastener, and an external thread is disposed on the fastened bar. After passing through the second communicating part, the fastened bar is locked to the internal thread, so that the cable is sealed and fastened in the enclosure. During installment, the fastened bar is aligned with the internal thread on the first fastener, and the fastened bar is rotated, so that the external thread on the fastened bar and the internal thread on the first fastener are locked. The fastened bar drives the first fastener to move. The first fastener pushes the first sealing kit to move to the clamping part. A part that is of the first sealing kit and that extends into the clamping part is deformed. Finally, the cable is sealed and fastened in the enclosure. By locking the threads, there is no need to apply too much force for installment, so that installment difficulty is reduced.

In some possible designs, a third communicating part through which the cable passes for cable fastening is disposed on the first fastener. The cable may be further fastened by using the third communicating part. The first fastener includes a base board, a fastening piece, and a support disposed on the base board, the third communicating part is formed between the support and the fastening piece, and the support is detachably fastened and connected to the fastening piece, so that the cable is locked in the third communicating part. For example, the support may be fastened and connected to the fastening piece by using a screw or through buckling.

In some possible designs, a press block is further disposed between the first sealing kit and the first fastener. A shape of the press block may adapt to the first sealing kit. By setting the press block, the first fastener pushes the press block, and the press block pushes the first sealing kit, so that it is more convenient to push the first sealing kit to enter the clamping part. The press block may be spliced by at least two casting dies, all the casting dies are detachably fastened and connected to each other, and each fourth communicating part includes at least two casting dies, so that the cable can pass through the fourth communicating part with no need of cutting off the cable. All casting dies may be fastened and connected to each other through buckling, and this is convenient for installment. All the casting dies may be further connected to each other by using a screw.

In some possible designs, a first positioning part is disposed on a side that is of the press block and that faces the first fastener, and a second positioning part that adapts to the first positioning part is disposed on a side that is of the first fastener and that faces the press block. The first positioning part and the second positioning part cooperate to position the first fastener. The first fastener can be quickly positioned by using the first positioning part and the second positioning part, so that installment efficiency and firmness of the connection apparatus can be improved. One of the first positioning part and the second positioning part is a positioning rod, and the other is a positioning hole, so that it is more convenient for installment.

A second aspect of this application further provides a communications terminal box. The communications terminal box includes a cable leading-in hole and the connection apparatus according to the first aspect or any one of the possible designs of the first aspect.

### BRIEF DESCRIPTION OF DRAWINGS

FIG. 1 is an exploded schematic structural diagram of a connection apparatus according to an embodiment of the present invention;
FIG. 2 is a front view of a connection apparatus according to an embodiment of the present invention;
FIG. 3 is a cutaway diagram of a connection apparatus according to an embodiment of the present invention;
FIG. 4 is a schematic structural diagram of a first sealing kit of a connection apparatus according to an embodiment of the present invention;
FIG. 5 is a schematic structural diagram of a visual angle of a connection apparatus according to an embodiment of the present invention;
FIG. 6 is a schematic structural diagram of a butterfly cable according to an embodiment of the present invention;
FIG. 7 is a schematic structural diagram of a first communicating part of a first sealing kit according to an embodiment of the present invention;
FIG. 8 is a partial schematic structural diagram formed after a cable and a connection apparatus are sealed and fastened according to an embodiment of the present invention; and
FIG. 9 is a schematic structural diagram of a casting die of a press block of a connection apparatus according to an embodiment of the present invention.

### DESCRIPTION OF EMBODIMENTS

In the specification, claims, and accompanying drawings of this application, the terms "first", "second", and so on are intended to distinguish between similar objects but do not necessarily indicate a specific order or sequence. It should be understood that the data termed in such a way is interchangeable in proper circumstances so that the embodiments of the present invention described herein can be implemented in other orders than the order illustrated or described herein. Moreover, the terms "include", "contain" and any other variants mean to cover the non-exclusive inclusion, for example, a product or device that includes a list of structures is not necessarily limited to those structures, but may include other structures not expressly listed or inherent to such a product or device. The structure examples in this application are merely logical examples and descriptions and may be other replaceable structures in actual implementation. For example, a plurality of components may be combined or integrated into another structure, or some structure features may be ignored or not performed. In addition, the displayed or discussed mutual couplings or direct couplings may be implemented by selecting some or all structures according to an actual requirement, to implement the objectives of the technical solutions in the embodiments of the present invention.

Embodiments of the present invention provide a connection apparatus for sealing a cable, and a communications terminal box, applied to the field of mechanical technologies, so as to resolve a prior-art problem of low efficiency for drop cable installment in an existing mechanism. The communications terminal box in this application may be a splitting and splicing closure, a cable-joint protection box, another fiber access terminal, and the like. A specific name is not limited in this application.

A heat shrink sealing manner is limited to a driving power supply, a mechanical sealing operation step is complex, and a joint box needs to be repeatedly flipped when an optical cable is led in. Therefore, to resolve the foregoing technical problems, the embodiments of the present invention mainly provide the following technical solutions:

Optical cable fastening and sealing are simultaneously implemented on one component. After an optical cable is sealed and fastened to a fiber plug, the fiber plug may be directly inserted into a corresponding hole of a splitting and splicing closure. Then, sealing between an optical fiber and an enclosure of a fiber access terminal is implemented by using a sealing ring. Further, an elastic buckle may be disposed on an outer wall of the fiber plug, so that the fiber plug is fastened and connected to the enclosure of the fiber access terminal, and quick installment, fastening, and sealing are implemented for the entire component. The fiber plug used in this application can improve fiber connection reliability and implement effective anti-vibration and anti-loosening.

It should be noted that the fiber plug in this application may also be a similar structure such as a cable plug. This application may be further applied to outdoor cable sealing and plug fastening, provided that the optical cable is changed to a corresponding cable. Certainly, this application may be further applied to any other scenario in which a cable needs to be sealed. Correspondingly, the splitting and splicing closure may be replaced with a cable-joint protection box. A specific application scenario is not limited in this application.

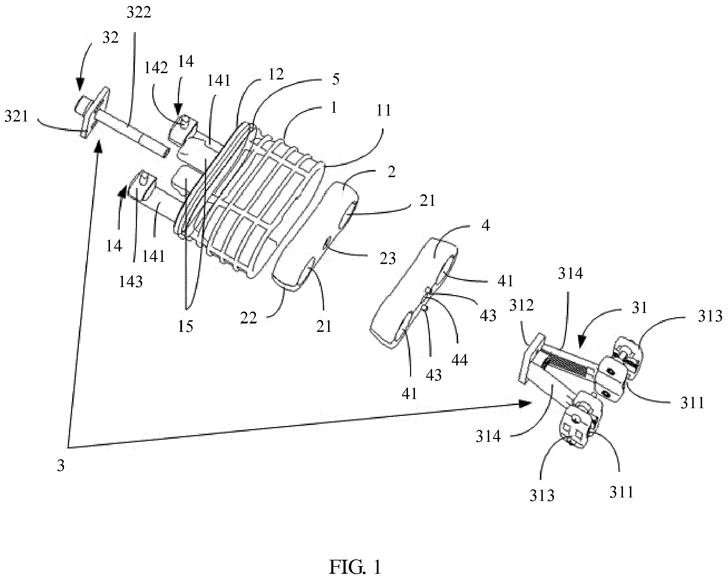

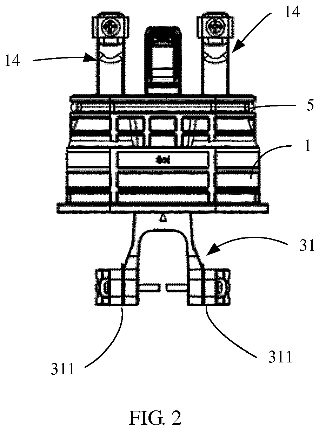

Referring to FIG. 1 and FIG. 2, the following provides a connection apparatus for sealing a cable, that is, the foregoing fiber plug. The connection apparatus may be used together with a communications terminal box, and may be connected to the communications terminal box. The connection apparatus includes an enclosure 1, a first sealing kit 2, and a first fastening structure 3.

The enclosure 1 is hollowly disposed, and includes a first end 11 and a second end 12, and the enclosure 1 extends from the first end 11 to the second end 12 in an axial direction.

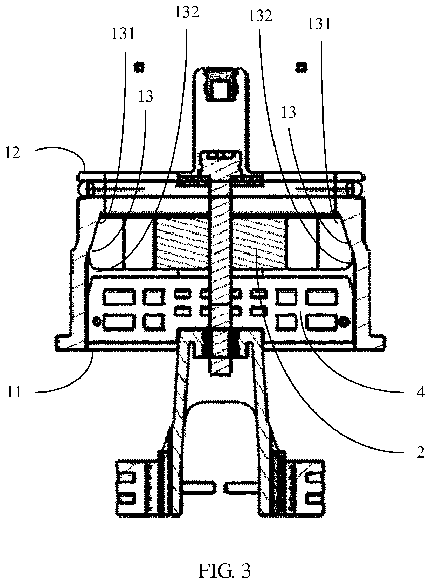

Referring to FIG. 3, a clamping part 13 is disposed in the enclosure 1, and the clamping part 13 is located between the first end 11 and the second end 12.

A first communicating part 21 through which the cable passes is disposed on the first sealing kit 2.

The first sealing kit 2 enters the enclosure 1 from the first end 11, and moves towards the second end 12 in the axial direction of the enclosure 1, so that the first sealing kit 2 at least partially extends into the clamping part along an inner peripheral wall of the clamping part; a part that is of the first sealing kit 2 and that extends into the clamping part is deformed; and the first fastening structure 3 is configured to detachably fasten the deformed first sealing kit 2 in the enclosure 1, so that the cable is sealed and fastened in the enclosure 1.

For example, an axial direction of a hollow structure in the enclosure 1 is the axial direction of the enclosure 1. The first end 11 and the second end 12 separately have an opening. The enclosure 1 is largely cylindrical or flat cylindrical.

For example, a shape of an inner wall of the first communicating part 21 matches a shape of a cross-section of the cable.

In comparison with the prior art, in the solutions provided in this application, by using the foregoing structure, after the cable is inserted into the first communicating part 21 of the first sealing kit 2, the first sealing kit 2 can enter the enclosure 1 from the first end 11 of the enclosure 1, and move towards the second end 12 in the axial direction of the enclosure 1. The part that is of the first sealing kit 2 and that extends into the clamping part 13 is deformed, so that sealing is implemented between the first communicating part 21 and the cable, and sealing is implemented between the clamping part 13 and the first sealing kit 2. Finally, the first sealing kit 2 is detachably fastened in the enclosure 1 by using the first fastening structure 3, so that the cable is sealed and fastened in the enclosure 1. According to this structure, an inserted cable can be fastened and sealed. In addition, this structure can be repeatedly opened, so that detachment is convenient, a driving power supply is not required, and an installment scenario is not limited. Further, the communications terminal box does not need to be repeatedly flipped when the cable is led in. Therefore, in comparison with an existing mechanism, installment can be simplified and installment efficiency can be improved.

For example, a first communicating part 21 may be disposed on the first sealing kit 2. At least one first sealing kit 2 may be disposed in each enclosure 1.

For another example, at least two first communicating parts 21 are disposed on the first sealing kit 2. Each first communicating part 21 may fasten a bunch of cables. Therefore, the first sealing kit 2 can fasten at least two bunches of cables. Each bunch of cables may include a plurality of cables. For example, each bunch of optical cables include a plurality of optical cables.

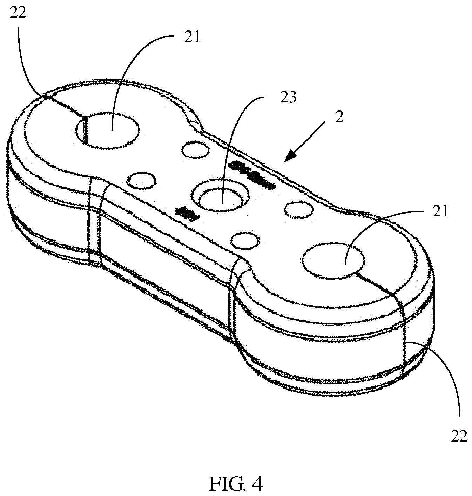

For example, referring to FIG. 4, a notch 22 communicating with the first communicating part 21 is further disposed on the first sealing kit 2, so that the cable enters the first communicating part 21 through the notch 22. Therefore, the cable can pass through the first communicating part 21 with no need of cutting off the cable. In an example in which two first communicating parts 21 are disposed on the first sealing kit 2, a bunch of cables separately pass through the two first communicating parts 21. Then, the first sealing kit 2 is fastened in the enclosure 1 with no need of cutting off the bunch of cables. When the cable is an optical cable, each bunch of cables include a plurality of optical cables. There is no need to cut off other optical cables except an optical cable corresponding to a user. For example, when the first sealing kit 2 is in a natural state, the notch 22 is in a closed state. The notch 22 may be opened by applying external force, so that the cable enters the first communicating part 21. Therefore, sealing performance of the first sealing kit 2 can be improved.

For example, as shown in FIG. 3, the clamping part 13 is hollowly disposed. The inner peripheral wall of the clamping part 13 gradually tightens in a direction from the first end 11 to the second end 12. A diameter of an end that is of the clamping part 13 and that is close to the first end 11 of the enclosure 1 is greater than a diameter of an end that is of the clamping part 13 and that is close to the second end 12 of the enclosure 1. Therefore, the first sealing kit 2 can enter the clamping part 13 easily, and gradually deform elastically along the inner wall of the clamping part 13. An opening that is of the clamping part 13 and that faces the first end 11 of the enclosure 1 can at least allow the cable to pass through. A shape of the inner wall of the clamping part 13 may be set according to an actual requirement, provided that sealing between the inner wall of the clamping part 13 and the first sealing kit 2 can be implemented. For example, the inner wall of the clamping part 13 is largely tapered. For example, the inner wall of the clamping part 13 may include a curved surface, and curvature of the curved surface increases with extension of the curved surface. The curved surface extends in an axial direction from the first end 11 to the second end 12. The curvature of the curved surface is set to be increased with extension of the curved surface, so that the first sealing kit 2 can be mechanically squeezed effectively when the first sealing kit 2 enters the curved surface, and the first sealing kit 2 can have a better sealing effect.

For example, the curved surface of the clamping part 13 may be a wedge-cone curved surface or a sectoral curved surface. The wedge-cone curved surface is used as an example below. As shown in a side cross section chart in FIG. 3, the wedge-cone curved surface includes an inlet end 131 and an outlet end 132. A diameter of the inlet end is not equal to a diameter of the outlet end. The inlet end 131 faces the first end 11 of the enclosure 1, and the outlet end 132 faces the second end 12 of the enclosure 1. In addition, the diameter of the outlet end 132 is less than the diameter of the inlet end 131. The outlet end 132 can at least allow the cable to pass through. A size of the diameter of the inlet end 131 may be flexibly set. It can be learned that, by using the wedge-cone curved surface or the sectoral curved surface, the cable can be better inserted, the first sealing kit 2 can be better mechanically squeezed into the curved surface, and certainly better sealing performance can be brought.

For example, a difference between the diameter of the inlet end 131 and the diameter of the outlet end 132 may be flexibly set according to parameters such as a diameter of the inner wall of the enclosure 1 and a shape and a size of an axial section of the cable. Sizes of the diameter of the inlet end 131 and the diameter of the outlet end 132, the difference between the diameter of the inlet end 131 and the diameter of the outlet end 132, and an axial length of the entire wedge-cone curved surface are not limited in this application. When the cable is inserted, the first sealing kit 2 may move in a direction from the inlet end 131 to the outlet end 132 of the wedge-cone curved surface by using external force or acting force of a fixed structure. In this way, radial holding force of the wedge-cone curved surface is applied to the first sealing kit 2. That is, a diameter of the first sealing kit 2 may be restricted and constantly shortened until the first sealing kit 2 and the pass-through cable can hold together tightly. In this way, the cable is finally sealed. Then, the sealed connection apparatus is connected to the communications terminal box.

For example, the clamping part 13 may be a part of the enclosure 1. That is, the clamping part 13 and the enclosure 1 are disposed together as a whole.

For another example, the clamping part 13 is detachably fastened and connected to the enclosure 1, for example, may be connected by using a buckle or a screw, or using acting force of interference fit. The clamping part 13 may be installed on the inner wall of the enclosure 1. A slot may be disposed on the inner wall of the enclosure 1 to fasten the clamping part 13, so that detachment is convenient, and a proper clamping part 13 can be selected according to the shape of the axial section of the cable. A plurality of clamping parts 13 may be configured in this application, to match the enclosure 1 for use.

For example, the clamping part 13 may be an elastic material. Therefore, when the cable is inserted and the first sealing kit 2 is locked in the enclosure 1, the clamping part 13 may deform, to reinforce sealing and fastening of the cable.

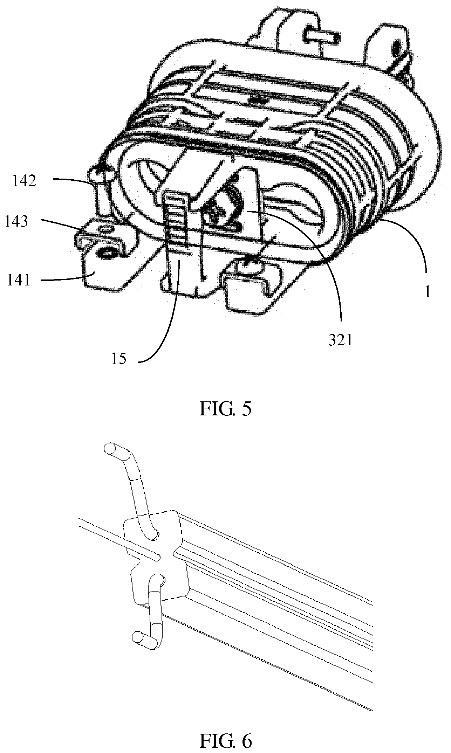

For example, the cable may include a strength member structure. The strength member structure is configured to reinforce strength of the cable, so as to prevent an optical fiber in an optical cable or a wire in the cable from being broken. To further fasten the cable, a second fastening structure 14 configured to fasten the strength member structure is further disposed on the enclosure 1. For example, as shown in FIG. 5 and FIG. 1, the second fastening structure 14 may include a support plate 141 disposed at the second end 12 of the enclosure 1. An internal thread is disposed on the support plate 141. The second fastening structure 14 further includes a screw 142. When the screw 142 and the internal thread on the support plate 141 are locked, a strength member may be clamped between the support plate 141 and the screw 142, so that the strength member is fastened. The second fastening structure 14 may further include a presser 143. After the screw 142 penetrates the presser 143, the screw 142 and the internal thread on the support plate 141 are locked, so that the strength member is clamped and fastened by using the presser 143 and the support plate 141.

For example, a location through which a nylon cable tie passes may be further reserved at the second end 12 of the enclosure 1. After the strength member structure of the cable is fastened, the cable may be further bound and fastened by using the tie.

The cable is fastened at both the first end 11 and the second end 12 of the enclosure 1, and the cable is sealed at the first end 11 of the enclosure 1, so that cable loosening or relatively poor sealing performance can be effectively avoided in this manner of fastening and sealing.

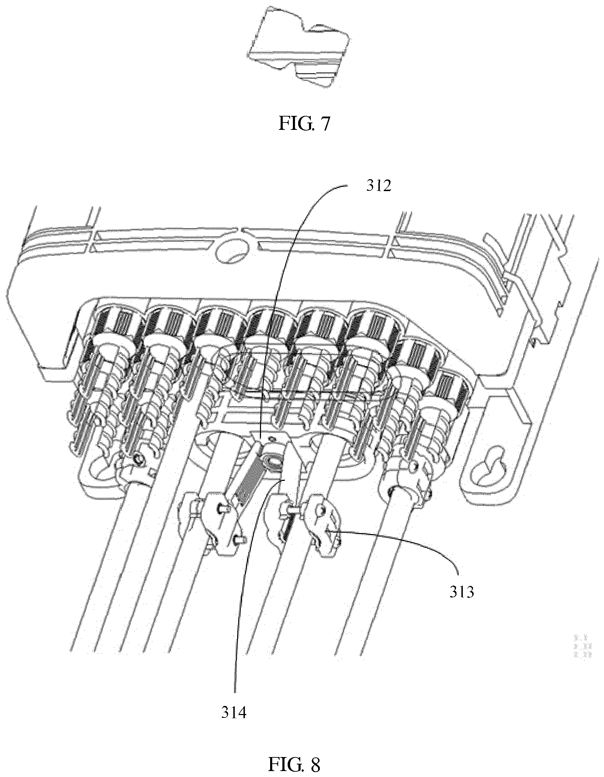

For example, in respect of different possible shapes of a cross-section of the cable, in this application, a matched structure of the first communicating part 21 of the first sealing kit 2 may be further accordingly designed according to a shape of the cross-section of the cable, provided that a shape of an inner wall of the first communicating part 21 of the first sealing kit 2 can match the shape of the cross-section of the cable. For example, for a butterfly cable shown in FIG. 6, a cross section of the butterfly cable is "8" shaped. Two opposite sides of the butterfly cable each have a tiny groove. Therefore, to ensure that the cable is better sealed by using the first sealing kit 2, an inner structure of the first communicating part 21 of the first sealing kit 2 may be accordingly set to an "8"-shaped structure shown in FIG. 7. A shape of an outer wall of the first sealing kit 2 does not change, and still matches a shape of the inner wall of the enclosure 1. By using the structure shown in FIG. 7, the cable may be sealed and fastened through compression of the wedge-cone curved surface. An inner hole of the first communicating part 21 of the first sealing kit 2 shown in FIG. 7 is an "8"-shaped through hole matching a shape and a size of the cross section of the butterfly cable. In this way, a problem of sealing the butterfly cable in the connection apparatus may be resolved.

For example, the first fastening structure 3 may abut against the first end 11 of the enclosure 1, and may be detachably fastened and connected to the second end 12 of the enclosure 1, so that the first sealing kit 2 is fastened in the enclosure 1. Alternatively, the first fastening structure 3 may abut against the second end 12 of the enclosure 1, and may be detachably fastened and connected to the first end 11 of the enclosure 1, so that the first sealing kit 2 is fastened in the enclosure 1.

For another example, as shown in FIG. 1, the first fastening structure 3 includes a first fastener 31 and a second fastener 32. One of the first fastener 31 and the second fastener 32 is disposed at the first end 11, and the other is disposed at the second end 12. The first fastener 31 is detachably fastened and connected to the second fastener 32. The first sealing kit 2 is fastened in the enclosure 1. For example, one of the first fastener 31 and the second fastener 32 abuts against the first end 11 of the enclosure 1, and the other abuts against the second end 12 of the enclosure 1, to hold and fasten the first sealing kit 2. By setting the two fasteners (that is, the first fastener 31 and the second fastener 32), the first sealing kit 2 can be better clamped and fastened more flexibly. The enclosure 1 does not need to be rotated in a fastening process, provided that the first fastener 31 is fastened to the second fastener 32.

For example, a through hole may be disposed in the enclosure 1, so that the first fastener 31 or the second fastener 32 passes through the through hole, to fasten and connect the first fastener 31 to the second fastener 32.

For another example, a second communicating part 23 through which the first fastener 31 or the second fastener 32 passes is disposed in the first sealing kit 2. An example in which the second fastener 32 passes through the second communicating part 23 is used for description. An example in which the first fastener 31 passes through the second communicating part 23 is not described herein. For details, refer to the descriptions that the second fastener 32 passes through the second communicating part 23.

After passing through the second communicating part 23, the second fastener 32 is detachably fastened and connected to the first fastener 31, so as to fasten the deformed first sealing kit 2 in the enclosure 1. In this way, the first sealing kit 2 can be fastened in the enclosure 1 more firmly.

For example, as shown in FIG. 1, the second fastener 32 includes a baseplate 321 and a fastened bar 322 disposed on the baseplate 321, and the baseplate 321 abuts against the second end 12 of the enclosure 1, so that the baseplate 321 of the second fastener 32 is positioned at the second end 12 of the enclosure 1. A groove matching the baseplate 321 may be further disposed in the enclosure 1, so that the baseplate 321 can be further positioned.

For example, an internal thread is disposed on the first fastener 31, an external thread is disposed on the fastened bar 322, and after passing through the second communicating part 23, the fastened bar 322 is locked to the internal thread, so that the cable is sealed and fastened in the enclosure 1. During installment, the fastened bar 322 is aligned with the internal thread on the first fastener 31, and the fastened bar 322 is rotated, so that the external thread on the fastened bar 322 and the internal thread on the first fastener 31 are locked. The fastened bar 322 drives the first fastener 31 to move. The first fastener 31 pushes the first sealing kit 2 to move to the clamping part 13. A part that is of the first sealing kit 2 and that extends into the clamping part 13 is deformed. Finally, the cable is sealed and fastened in the enclosure 1. By locking the threads, there is no need to apply too much force for installment, so that installment difficulty is reduced.

For another example, the first fastener 31 may be further fastened and connected to the fastened bar 322 through buckling.

For example, as shown in FIG. 1, FIG. 2, and FIG. 8, a third communicating part 311 through which the cable passes for cable fastening is disposed on the first fastener 31. The cable may be further fastened by using the third communicating part 311.

For example, a quantity of first communicating parts 21 on the first sealing kit 2 is the same as a quantity of third communicating parts 311 on the first fastener 31. A location of each first communicating part 21 is corresponding to a location of one third communicating part 311. The cable successively passes through the third communicating part 311 and the first communicating part 21.

For example, the first fastener 31 includes a base board 312, a fastening piece 313, and a support 314 disposed on the base board 312, the third communicating part 311 is formed between the support 314 and the fastening piece 313, and the support 314 is detachably fastened and connected to the fastening piece 313, so that the cable is locked in the third communicating part 311. For example, the support 314 may be fastened and connected to the fastening piece 313 by using a screw or through buckling.

For example, an internal thread structure on the first fastener 31 is disposed on the base board 312.

For example, as shown in FIG. 1, the connection apparatus further includes a press block 4 disposed between the first sealing kit 2 and the first fastener 31. A shape of the press block 4 may adapt to the first sealing kit 2. For example, a shape of a side face that is of the press block 4 and that is bonded on the first sealing kit 2 matches a shape of a side face that is of the first sealing kit 2 and that is bonded on the press block 4. The base board 312 of the first fastener 31 abuts against the press block 4, and pushes the press block 4. By setting the press block 4, the first fastener 31 pushes the press block 4, and the press block 4 pushes the first sealing kit 2, so that it is more convenient to push the first sealing kit 2 to enter the clamping part 13.

A fourth communicating part 41 through which the cable passes is disposed on the press block 4. For a shape of the fourth communicating part 41, refer to the first communicating part 21. Details are not described herein again.

For example, as shown in FIG. 1, a fifth communicating part 44 through which the first fastener 31 or the second fastener 32 passes is further disposed on the press block 4.

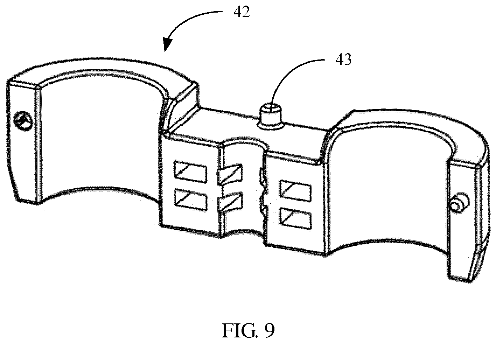

For example, as shown in FIG. 1 and FIG. 9, the press block 4 is spliced by at least two casting dies 42, all the casting dies 42 are detachably fastened and connected to each other, and each fourth communicating part 41 includes at least two casting dies 42, so that the cable can pass through the fourth communicating part 41 with no need of cutting off the cable. For example, as shown in FIG. 9 , two fourth communicating parts 41 are disposed on the press block 4. The press block 4 includes two casting dies 42. Each casting die 42 is largely "3" shaped. After the two casting dies 42 are spliced, the press block 4 is largely "8" shaped.

For example, all casting dies 42 may be fastened and connected to each other through buckling, and this is convenient for installment. For example, a buckle is disposed on a casting die 42, and a hole is disposed on another casting die 42. Therefore, the two casting dies 42 are fastened and connected to each other through buckling. For another example, all casting dies 42 may be further connected to each other by using a screw.

For example, a first positioning part 43 is disposed on a side that is of the press block 4 and that faces the first fastener 31, a second positioning part (not shown in the figure) that adapts to the first positioning part 43 is disposed on a side that is of the first fastener 31 and that faces the press block 4, and the first positioning part 43 and the second positioning part cooperate to position the first fastener 31. The first fastener 31 may be quickly positioned by using the first positioning part 43 and the second positioning part, so that installment efficiency and firmness of the connection apparatus can be improved.

For example, the first positioning part 43 includes at least two positioning rods. The second positioning part includes at least two positioning holes. For another example, the first positioning part 43 includes at least two positioning holes. The second positioning part includes at least two positioning rods.

For example, a groove matching the base board 312 may be disposed on a side face that is of the press block 4 and that faces the base board 312.

For example, to reinforce sealing and fastening between the connection apparatus and the communications terminal box, as shown in FIG. 1 and FIG. 2, a second sealing kit 5 may be further disposed. The second sealing kit 5 is configured to connect to an inner wall of the communications terminal box for sealing through interference fit. The second sealing kit 5 matches an outer wall of the enclosure 1. When the connection apparatus in which the cable is installed is connected to the communications terminal box, the second sealing kit 5 and the connection apparatus are mutually inserted for connection, so that the second sealing kit 5 and the inner wall of the communications terminal box are sealed and connected through interference fit.

The manner of interference fit means cooperation of interference (including a minimum interference equal to zero). For example, a diameter of a matched axis needs to be greater than a diameter of a hole. Then, the axis is squeezed into the hole by using a tool. Alternatively, the hole is heated according to a feature of thermal expansion and contraction. When the diameter of the hole is enlarged, the axis is put into the hole quickly. After the hole becomes cold and shrunk, the two components become a whole. It can be learned that the sealing and fastening between the connection apparatus and the communications terminal box can be reinforced by using the second sealing kit 5.

In some implementations, to further prevent cable loosening, as shown in FIG. 1 and FIG. 5, a third fastening structure 15 is further disposed on the enclosure 1, and the third fastening structure 15 is configured to fasten the connection apparatus to the communications terminal box, so that the second sealing kit 5 and the inner wall of the communications terminal box are sealed. The third fastening structure 15 may be a component such as an elastic buckle or hook, to implement locking. In addition, the third fastening structure 15 may be detached by externally applying force to the enclosure 1, so that the connection apparatus and the communications terminal box can be easily separated. It can be learned that installment and detachment operations may be easily completed by using the elastic buckle without requiring an installation tool. Specifically, an elastic buckle close to the second sealing kit 5 may be disposed on an outer wall of the second end 12 of the enclosure 1. When the connection apparatus in which the cable is installed is connected to the communications terminal box, snap-fit is formed between the elastic buckle and the inner wall of the communications terminal box, so that the second sealing kit 5 and the inner wall of the communications terminal box are sealed and connected.

It should be noted that a quantity of first sealing kits 2, a quantity of second sealing kits 5, and a quantity of clamping parts 13, and shapes of the first sealing kit 2, the second sealing kit 5, and the clamping part 13 are not limited in this application. A specific quantity may be selected according to factors such as a fastening requirement and a quantity of deployed cables. In addition, a feature of a same component in any corresponding embodiment in FIG. 1 to FIG. 10 in this application is applicable to the following embodiment corresponding to the communications terminal box. Details are not described herein again.

This application further provides a communications terminal box. The communications terminal box includes the connection apparatus shown in any one of FIG. 1 to FIG. 10. After the connection apparatus is inserted into the communications terminal box, a complete communications terminal box may be formed.

The connection apparatus in this application may be an apparatus independent of the communications terminal box, or may be a component of the communications terminal box. In addition, the connection apparatus can be directly connected to the communications terminal box, or a communication connection between the connection apparatus and the communications terminal box may be implemented by using another adapter component. Specifically, this is not limited in this application.

In the foregoing embodiments, the description of each embodiment has respective focuses. For a part that is not described in detail in an embodiment, reference may be made to related descriptions in other embodiments.

It may be clearly understood by a person skilled in the art that, for the purpose of convenient and brief description, for a detailed working process of the foregoing system, apparatus, and module, reference may be made to a corresponding process in the foregoing method embodiments, and details are not described herein.

In the several embodiments provided in this application, it should be understood that the disclosed system, apparatus, and method may be implemented in other manners. For example, the described apparatus embodiment is merely an example. For example, the module division is merely logical function division and may be other division in actual implementation. For example, a plurality of modules or components may be combined or integrated into another system, or some features may be ignored or not performed. In addition, the displayed or discussed mutual couplings or direct couplings or communication connections may be implemented through some interfaces. The indirect couplings or communication connections between the apparatuses or modules may be implemented in electronic, mechanical, or other forms.

The modules described as separate parts may or may not be physically separate, and parts displayed as modules may or may not be physical modules, may be located in one position, or may be distributed on a plurality of network modules. Some or all of the modules may be selected according to actual needs to achieve the objectives of the solutions of the embodiments.

In addition, functional modules in the embodiments of this application may be integrated into one processing module, or each of the modules may exist alone physically, or two or more modules are integrated into one module. The integrated module may be implemented in a form of hardware, or may be implemented in a form of a software functional module. When the integrated module is implemented in the form of a software functional module and sold or used as an independent product, the integrated unit may be stored in a computer-readable storage medium.

The technical solutions provided in this application are described in detail above. The principle and implementation of this application are described by using specific examples. The description about the embodiments is merely provided to help understand the method and core ideas of this application. In addition, a person of ordinary skill in the art can make variations and modifications to this application in terms of the specific implementations and application scopes according to the ideas of this application. Therefore, the content of this specification shall not be construed as a limit to this application.

## Claims

1. A connection apparatus for sealing a cable, wherein the connection apparatus comprises an enclosure, a first sealing kit, and a first fastening structure;
the enclosure is hollowly disposed, and comprises a first end and a second end, and the enclosure extends from the first end to the second end in an axial direction;
a clamping part is disposed in the enclosure, and the clamping part is located between the first end and the second end;
a first communicating part through which the cable passes is disposed on the first sealing kit; and
the first sealing kit enters the enclosure from the first end, and moves towards the second end in the axial direction of the enclosure, so that the first sealing kit at least partially extends into the clamping part along an inner peripheral wall of the clamping part; a part that is of the first sealing kit and that extends into the clamping part is deformed; and the first fastening structure is configured to detachably fasten the deformed first sealing kit in the enclosure, so that the cable is sealed and fastened in the enclosure.

2. The connection apparatus according to claim 1, wherein at least two first communicating parts are disposed on the first sealing kit.

3. The connection apparatus according to claim 1 or 2, wherein a notch communicating with the first communicating part is further disposed on the first sealing kit, so that the cable enters the first communicating part through the notch.

4. The connection apparatus according to any one of claims 1 to 3, wherein the inner peripheral wall of the clamping part gradually tightens in a direction from the first end to the second end.

5. The connection apparatus according to any one of claims 1 to 4, wherein the first fastening structure comprises a first fastener and a second fastener, a second communicating part through which the second fastener passes is disposed in the first sealing kit, and one of the first fastener and the second fastener is disposed at the first end, and the other is disposed at the second end; and
after passing through the second communicating part, the second fastener is detachably fastened and connected to the first fastener, so as to fasten the deformed first sealing kit in the enclosure.

6. The connection apparatus according to claim 5, wherein the second fastener comprises a baseplate and a fastened bar disposed on the baseplate, and the baseplate abuts against the second end of the enclosure.

7. The connection apparatus according to claim 6, wherein an internal thread is disposed on the first fastener, an external thread is disposed on the fastened bar, and after passing through the second communicating part, the fastened bar is locked to the internal thread, so that the cable is sealed and fastened in the enclosure.

8. The connection apparatus according to any one of claims 5 to 7, wherein a third communicating part through which the cable passes for cable fastening is disposed on the first fastener, wherein the first fastener comprises a base board, a fastening piece, and a support disposed on the base board, the third communicating part is formed between the support and the fastening piece, and the support is detachably fastened and connected to the fastening piece, so that the cable is locked in the third communicating part.

9. The connection apparatus according to any one of claims 5 to 8, wherein the connection apparatus further comprises a press block disposed between the first sealing kit and the first fastener.

10. The connection apparatus according to claim 9, wherein a fourth communicating part through which the cable passes is disposed on the press block, wherein the press block is spliced by at least two casting dies, all the casting dies are detachably fastened and connected to each other, and each fourth communicating part comprises at least two casting dies.

11. The connection apparatus according to any one of claims 9 to 10, wherein a first positioning part is disposed on a side that is of the press block and that faces the first fastener, a second positioning part that adapts to the first positioning part is disposed on a side that is of the first fastener and that faces the press block, and the first positioning part and the second positioning part cooperate to position the first fastener.

12. The connection apparatus according to any one of claims 1 to 11, wherein the clamping part is detachably fastened and connected to the enclosure.

13. The connection apparatus according to any one of claims 1 to 12, wherein the connection apparatus further comprises a second sealing kit matching an outer wall of the enclosure, and the second sealing kit is configured to connect to an inner wall of a communications terminal box for sealing through interference fit.

14. The connection apparatus according to claim 13, wherein a third fastening structure is further disposed on the enclosure, and the third fastening structure is configured to fasten the connection apparatus to the communications terminal box, so that the second sealing kit and the inner wall of the communications terminal box are sealed.

15. A communications terminal box, wherein the communications terminal box comprises a cable leading-in hole and the connection apparatus according to any one of claims 1 to 14.
